# EUROPEAN PATENT APPLICATION

(11) **EP 4 806 675 A1**
(43) Date of publication of application: **16.09.2026**
(21) Application number: 25738459.4
(22) Date of filing: 08.01.2025
(51) Int. Cl.: B60G 17/015, B60G 17/019, B66F 3/25

(54) **LIFTING DEVICE AND VEHICLE**

(30) Priority: 08.01.2024 CN 202410026077
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: DING, Ren, Ningbo, Zhejiang 315899 (CN); MA, Zuguo, Ningbo, Zhejiang 315899 (CN)
(74) Representative: Michalski Hüttermann & Partner mbB
(86) International application number: PCT/CN2025/071281
(87) International publication number: WO 2025/148930

(57) **Abstract**

A lifting apparatus (10) and a vehicle. The lifting apparatus (10) includes a driving assembly (100), an elastic member (200), a transmission assembly (300), and a brake assembly (400). The transmission assembly (300) is connected to the driving assembly (100) and is connected to the elastic member (200), and the driving assembly (100) is configured to drive the transmission assembly (300) to move along a first direction, so that the transmission assembly (300) drives the elastic member (200) to move along the first direction. The brake assembly (400) includes a first magnetic member (410) and a second magnetic member (420), and the first magnetic member (410) is connected to the driving assembly (100). The brake assembly (400) has a power-on state and a power-off state, where in the power-on state, there is a gap between the first magnetic member (410) and the second magnetic member (420) to allow the driving assembly (100) to drive the transmission assembly (300) to move; and in the power-off state, the first magnetic member (410) is attracted to the second magnetic member (420) to prevent the driving assembly (100) from driving the transmission assembly (300) to move.

## Description

### CROSS-REFERENCE TO RELATED APPLICATIONS

The present disclosure claims priority to Chinese Patent Application No. 202410026077.X, filed on January 08, 2024, which is incorporated herein by reference in its entirety.

### TECHNICAL FIELD

The present disclosure relates to, but is not limited to, the technical field of vehicle accessories, and in particular, to a lifting apparatus and a vehicle.

### BACKGROUND

With diversification of user requirements, usage scenarios of a vehicle increase. A trafficability of the vehicle when encountering obstacles or steep slopes that are difficult to traverse in a normal vehicle attitude has become an important indicator for measuring vehicle performance.

### SUMMARY

The following is a summary of subject matter described in detail herein. This summary is not intended to limit the scope of protection of the claims.

The present disclosure provides a lifting apparatus and a vehicle, which can quickly lock a height of a vehicle body.

An aspect of the present disclosure provides a lifting apparatus, including: a driving assembly; an elastic member; a transmission assembly, connected to the driving assembly, and connected to the elastic member, the driving assembly being configured to drive the transmission assembly to move along a first direction, so that the transmission assembly drives the elastic member to move along the first direction, where the transmission assembly is provided with an accommodating cavity extending along the first direction and configured to accommodate a vibration damping apparatus; and a brake assembly, including a first magnetic member and a second magnetic member, the first magnetic member being connected to the driving assembly, where the brake assembly has a power-on state and a power-off state, in the power-on state, there is a gap between the first magnetic member and the second magnetic member to allow the driving assembly to drive the transmission assembly to move, and in the power-off state, the first magnetic member is attracted to the second magnetic member to prevent the driving assembly from driving the transmission assembly to move.

With the lifting apparatus according to the present disclosure, the driving assembly and the transmission assembly may provide a lifting force, enabling rapid lifting of the vehicle, and improving a trafficability and an off-road capability of the vehicle. Moreover, the lifting apparatus may be automatically locked when the vehicle experiences a power loss to maintain the height of the vehicle body, resulting in high safety and reliability.

Optionally, the first magnetic member includes a first permanent magnet, a reset member, and a first friction plate, the second magnetic member includes a second permanent magnet, a coil, and a second friction plate, there is an attractive magnetic force between the first permanent magnet and the second permanent magnet, and the reset member is configured to provide the first permanent magnet with an elastic force, so as to move the first permanent magnet close to the second permanent magnet; in response to the brake assembly being in the power-on state, the coil is powered on to overcome the attractive magnetic force between the first permanent magnet and the second permanent magnet, to cause the first magnetic member to move away from the second magnetic member, so that there is a gap between the first magnetic member and the second magnetic member, and the reset member is deformed; and in response to the brake assembly being in the power-off state, the coil is powered off, the reset member returns, and the attractive magnetic force between the first permanent magnet and the second permanent magnet causes the first magnetic member to move towards the second magnetic member, so that the first friction plate and the second friction plate are preloaded.

Optionally, the first direction includes a vertical direction, and the brake assembly is located below the driving assembly and the transmission assembly in the vertical direction.

Optionally, the driving assembly includes a first driving member and a second driving member, the second driving member is located in the first driving member, and in response to the first driving member being powered on, a magnetic field generated by the first driving member drives the second driving member to rotate around a central axis of the second driving member; and the first driving member and the second driving member are annular in shape, the transmission assembly is located in the second driving member, the transmission assembly is connected to the second driving member, and the transmission assembly is configured to convert a rotational motion of the second driving member into a linear motion along the first direction.

Optionally, the transmission assembly includes a first transmission member, a second transmission member, and a third transmission member, the first transmission member is connected to the second driving member, and the second driving member is configured to drive the first transmission member to rotate; the second transmission member is located in the first transmission member, and the second transmission member is in a hollow cylindrical shape in the first direction to define the accommodating cavity; and the first transmission member is provided with an internal thread, the second transmission member is provided with an external thread corresponding to the internal thread of the first transmission member, there are a plurality of third transmission members, and the plurality of third transmission members are engaged with the first transmission member and the second transmission member, so that a rotational motion of the first transmission member is converted into a linear motion of the second transmission member in the first direction.

Optionally, the lifting apparatus further includes a support member configured to support the elastic member, the support member is connected to the transmission assembly, and the support member is farther away from the brake assembly than the transmission assembly; where the support member is configured to be driven by the transmission assembly to move along the first direction, so as to drive the elastic member to move along the first direction.

Optionally, the lifting apparatus further includes an encoder, disposed at the transmission assembly, and configured to monitor states of the driving assembly and the transmission assembly; and/or the lifting apparatus further includes a temperature sensor, configured to monitor temperatures of the driving assembly and the transmission assembly.

Optionally, the lifting apparatus further includes an outer housing, the outer housing defines a housing cavity, and the driving assembly, the transmission assembly, and the brake assembly are located in the housing cavity; where the outer housing includes a first wall and a second wall opposite to each other in the first direction, and the outer housing is provided with an opening portion penetrating through the first wall and the second wall, and the opening portion is configured to receive the vibration damping apparatus.

Optionally, the lifting apparatus further includes a limiting assembly, the limiting assembly includes a first bearing and a second bearing, the first bearing and the second bearing are both connected to the first transmission member, and the first bearing and the second bearing are spaced apart from each other along the first direction.

Optionally, the transmission assembly includes a planetary roller screw mechanism, the first transmission member includes a screw nut, the second transmission member includes a screw, and the third transmission member includes a roller.

Optionally, the support member includes a buffer portion, the buffer portion is disposed at a portion where the elastic member abuts against the support member, and the buffer portion is configured to protect the support member and the elastic member.

Optionally, the lifting apparatus further includes: an oil seal, located between the outer housing and the vibration damping apparatus, and disposed around the vibration damping apparatus.

Optionally, the lifting apparatus further includes: a sliding sleeve, located between the outer housing and the vibration damping apparatus, and disposed around the vibration damping apparatus.

Another aspect of the present disclosure provides a vehicle, including: a vibration damping apparatus; and the lifting apparatus according to any one of the above, the vibration damping apparatus being assembled in the accommodating cavity.

Optionally, the vibration damping apparatus, the driving assembly, the transmission assembly, and the brake assembly are coaxially assembled.

Other aspects will become apparent upon reading and understanding the accompanying drawings and detailed description.

### BRIEF DESCRIPTION OF DRAWINGS

The accompanying drawings herein, which are incorporated in and constitute a part of this specification, illustrate embodiments consistent with the present disclosure and, together with the specification, serve to explain the principles of the present disclosure.
FIG. 1 is a schematic structural diagram of a vehicle according to an embodiment of the present disclosure.
FIG. 2 is a schematic structural diagram of a lifting apparatus according to an embodiment of the present disclosure.
FIG. 3A is a schematic cross-sectional view of the lifting apparatus shown in FIG. 2.
FIG. 3B is a schematic enlarged view of a brake assembly according to an embodiment of the present disclosure.
FIG. 4 is a schematic partial enlarged view of the lifting apparatus shown in FIG. 2.

### DETAILED DESCRIPTION

Reference will now be made in detail to exemplary embodiments, examples of which are illustrated in the accompanying drawings. When the following description refers to the accompanying drawings, the same numerals in different accompanying drawings indicate the same or similar elements, unless otherwise indicated. The implementations described in the following exemplary embodiments do not represent all implementations consistent with the present disclosure. Rather, they are merely examples of apparatuses and methods consistent with some aspects of the present disclosure as detailed in the appended claims.

The terms used in the present disclosure are for the purpose of describing particular embodiments only, and are not intended to limit the present disclosure. Unless otherwise defined, technical terms or scientific terms used in the present disclosure should have the ordinary meanings understood by those of ordinary skill in the art to which the present disclosure belongs. The terms "first", "second", and the like used in the specification and claims of the present disclosure do not indicate any order, quantity or importance, but are only used to distinguish between different components. Similarly, words such as "a" or "an" do not indicate a quantity limitation, but indicate the presence of at least one. "A plurality of" or "several" means at least two. Unless otherwise indicated, the terms "front", "rear", "lower" and/or "upper", "top", "bottom", and the like are only for convenience of description, and are not limited to one position or one spatial orientation. Words such as "include" or "comprise" mean that elements or objects before "include" or "comprise" cover elements or objects listed after "include" or "comprise" and their equivalents, and do not exclude other elements or objects. Words such as "connect" or "couple" are not limited to physical or mechanical connections, and may include electrical connections, whether direct or indirect.

As used in the specification of the present disclosure and the appended claims, the singular forms "a", "an", "said", and "the" are intended to include the plural forms as well, unless the context clearly indicates otherwise. It should also be understood that the term "and/or" used herein refers to and includes any or all possible combinations of one or more of the associated listed items.

At present, a height of a vehicle is mainly adjusted by changing a volume of an air spring, by changing a position of a spring seat of a height adjustable damper, and by a hydraulic damper. The height of the vehicle body may be suddenly changed when the entire vehicle experiences a power loss, which results in a low reliability and poor user experience.

In view of this, the present disclosure provides a lifting apparatus and a vehicle. The lifting apparatus according to the present disclosure includes a driving assembly, an elastic member, a transmission assembly, and a brake assembly. The transmission assembly is connected to the driving assembly, and is connected to the elastic member, and the driving assembly is configured to drive the transmission assembly to move along a first direction, so that the transmission assembly drives the elastic member to move along the first direction. The transmission assembly is provided with an accommodating cavity extending along the first direction and configured to accommodate a vibration damping apparatus. The brake assembly includes a first magnetic member and a second magnetic member, and the first magnetic member is connected to the driving assembly. An operating state of the brake assembly includes a power-on state and a power-off state, where in the power-on state, there is a gap between the first magnetic member and the second magnetic member to allow the driving assembly to drive the transmission assembly to move; and in the power-off state, the first magnetic member is attracted to the second magnetic member to prevent the driving assembly from driving the transmission assembly to move.

With the lifting apparatus according to the present disclosure, the driving assembly and the transmission assembly may provide a lifting force, enabling rapid lifting of the vehicle, and improving the trafficability and off-road capability of the vehicle. Moreover, the lifting apparatus may be automatically locked when the vehicle experiences a power loss to maintain the height of the vehicle body, resulting in high safety and reliability.

The vehicle according to the present disclosure includes the vibration damping apparatus and the lifting apparatus. The vibration damping apparatus is assembled in the accommodating cavity of the lifting apparatus.

The lifting apparatus and the vehicle of the present disclosure will be described in detail below with reference to the accompanying drawings. The features in the following embodiments and implementations may be combined with each other without conflict.

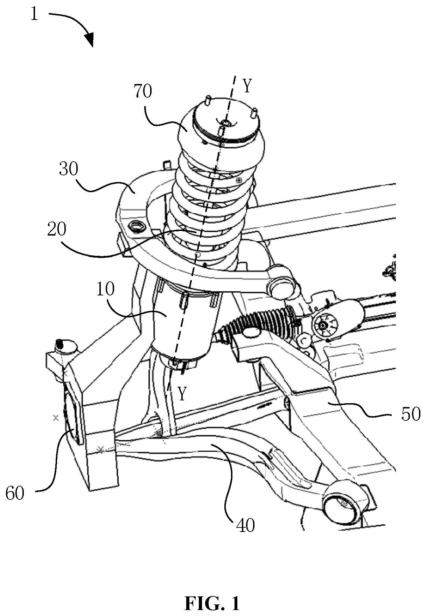

FIG. 1 is a schematic structural diagram of a vehicle 1 according to an embodiment of the present disclosure. The vehicle 1 according to the embodiment of the present disclosure mainly includes a new energy vehicle, and the new energy vehicle may further include a pure electric vehicle, a hybrid vehicle, a plug-in hybrid vehicle, and another vehicle that uses a vehicle-mounted power battery as a main power source or one of power sources. The vehicle 1 according to the embodiment of the present disclosure includes a vibration damping apparatus 20 and a lifting apparatus 10. The vibration damping apparatus 20 is an apparatus for reducing vibration and shock caused by road unevenness and bumps, and vibration of the vehicle itself when the vehicle is in motion, and is located in a suspension system of the vehicle, which may improve ride comfort and handling stability of the vehicle. In this embodiment, the vibration damping apparatus 20 is assembled in an accommodating cavity 310 of the lifting apparatus 10, that is, the lifting apparatus 10 is assembled on an outer cylinder of the vibration damping apparatus 20, and is fixedly connected to the vibration damping apparatus 20 by a welding bracket on the outer cylinder of the vibration damping apparatus 20, which results in a high load-bearing capacity. In the related art, the assembly of the lifting apparatus on a piston rod of the vibration damping apparatus requires the use of a part of a length of the outer cylinder of the vibration damping apparatus, which limits an arrangement structure. The lifting apparatus 10 according to the embodiment of the present disclosure is assembled on the outer cylinder of the vibration damping apparatus 20, and the arrangement structure thereof is not limited by the vibration damping apparatus 20, resulting in higher assembly flexibility.

As shown in FIG. 1, a lower part of the lifting apparatus 10 may be connected to a lower control arm 40, and the lower control arm 40 is connected to a sub-frame 50 and a steering knuckle 60. An upper part of the lifting apparatus 10 may be connected to an upper mounting bracket 70, and an upper control arm 30 is disposed circumferentially around the lifting apparatus 10.

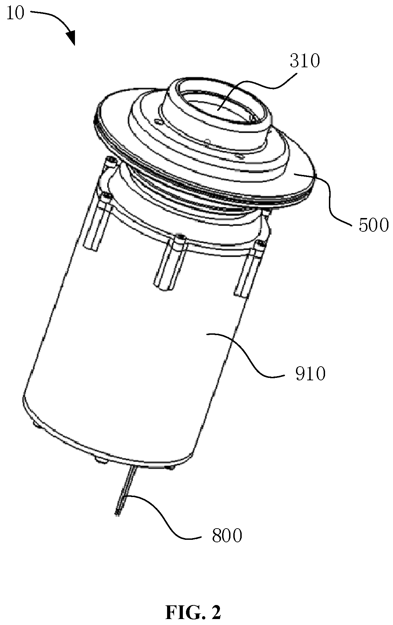

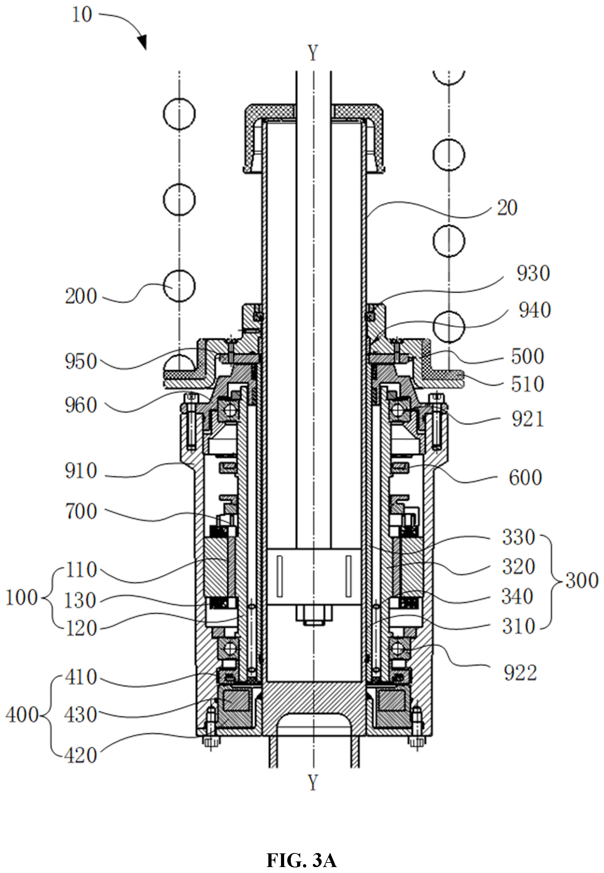

FIG. 2 is a schematic structural diagram of a lifting apparatus 10 according to an embodiment of the present disclosure. FIG. 3A is a schematic cross-sectional view of the lifting apparatus 10 shown in FIG. 2. The lifting apparatus 10 according to the embodiment of the present disclosure includes a driving assembly 100, an elastic member 200, a transmission assembly 300, and a brake assembly 400. The transmission assembly 300 is connected to the driving assembly 100 and is connected to the elastic member 200, and the driving assembly 100 is configured to drive the transmission assembly 300 to move along a first direction, so that the transmission assembly 300 drives the elastic member 200 to move along the first direction. The transmission assembly 300 is provided with an accommodating cavity 310 extending in the first direction and configured to accommodate a vibration damping apparatus 20. The brake assembly 400 includes a first magnetic member 410 and a second magnetic member 420, and the first magnetic member 410 is connected to the driving assembly 100. An operating state of the brake assembly 400 includes a power-on state and a power-off state, where in response to the brake assembly 400 being in the power-on state, there is a gap between the first magnetic member 410 and the second magnetic member 420 to allow the driving assembly 100 to drive the transmission assembly 300 to move; and in response to the brake assembly 400 being in the power-off state, the first magnetic member 410 is attracted to the second magnetic member 420 to prevent the driving assembly 100 from driving the transmission assembly 300 to move.

With the lifting apparatus 10 according to the embodiment of the present disclosure, the driving assembly 100 and the transmission assembly 300 may provide a lifting force, enabling rapid lifting of the vehicle, and improving the trafficability and off-road capability of the vehicle. Moreover, the lifting apparatus 10 may be automatically locked when the vehicle experiences a power loss to maintain the height of the vehicle body, resulting in high safety and reliability.

In the related art, the vehicle lifting method mainly includes the following three types of methods: adjusting a vehicle height by changing the volume of the air spring, adjusting the vehicle height by changing the position of the spring seat of the height adjustable damper, and adjusting the vehicle height by the hydraulic damper. The air spring cannot achieve steplessly adjustable travel, exhibits a slow response, and has low reliability, which cannot meet the demands for severe operating conditions during deep off-road operation of the vehicle. The height adjustment by the height adjustable damper is inconvenient to operate. The hydraulic damper is complex in system, high in cost, and low in reliability, and is prone to oil leakage. In addition, the above methods cannot realize dynamic control of tires of the vehicle, and offer limited contribution to handling and comfort of the vehicle, nor can they improve a suppression capability of the vehicle in terms of pitch and roll, resulting in relatively limited functionality. Compared with the above vehicle lifting methods, the lifting apparatus 10 in this embodiment has advantages in lifting speed, operation convenience, reliability, machining convenience, etc.

In some embodiments, the vibration damping apparatus 20, the driving assembly 100, the transmission assembly 300, and the brake assembly 400 are coaxially assembled. Y-Y shown in FIGS. 1 and 3A is indicative of an axis of the lifting apparatus 10 and the vibration damping apparatus 20.

It should be noted that, as shown in FIGS. 1 and 3A, the first direction is a direction of the axis Y-Y of the lifting apparatus 10 and the vibration damping apparatus 20 in the present disclosure. The elastic member 200 may include a coil spring.

In some embodiments, the lifting apparatus 10 is powered by a DC voltage source, which has characteristics such as high response frequency and convenient control.

In some embodiments, the first magnetic member 410 includes a first permanent magnet, a reset member, and a first friction plate, and the second magnetic member 420 includes a second permanent magnet, a coil 430, and a second friction plate. There is an attractive magnetic force between the first permanent magnet and the second permanent magnet, and the reset member is configured to provide the first permanent magnet with an elastic force, so as to move the first permanent magnet close to the second permanent magnet. In response to the brake assembly 400 being in the power-on state, the coil 430 is powered on to overcome the attractive magnetic force between the first permanent magnet and the second permanent magnet, to cause the first magnetic member 410 to move away from the second magnetic member 420, so that there is a gap between the first magnetic member 410 and the second magnetic member 420, and the reset member is deformed. In response to the brake assembly 400 being in the power-off state, the coil 430 is powered off, the reset member returns, and the attractive magnetic force between the first permanent magnet and the second permanent magnet causes the first magnetic member 410 to move towards the second magnetic member 420, so that the first friction plate and the second friction plate are preloaded. In the related art, a lifting height cannot be accurately locked after the lifting apparatus is lifted. In this embodiment, the lifting apparatus 10 may realize accurate locking at any lifting position of the vehicle, and may realize power-off automatic locking, which is safe and reliable, and has high locking accuracy.

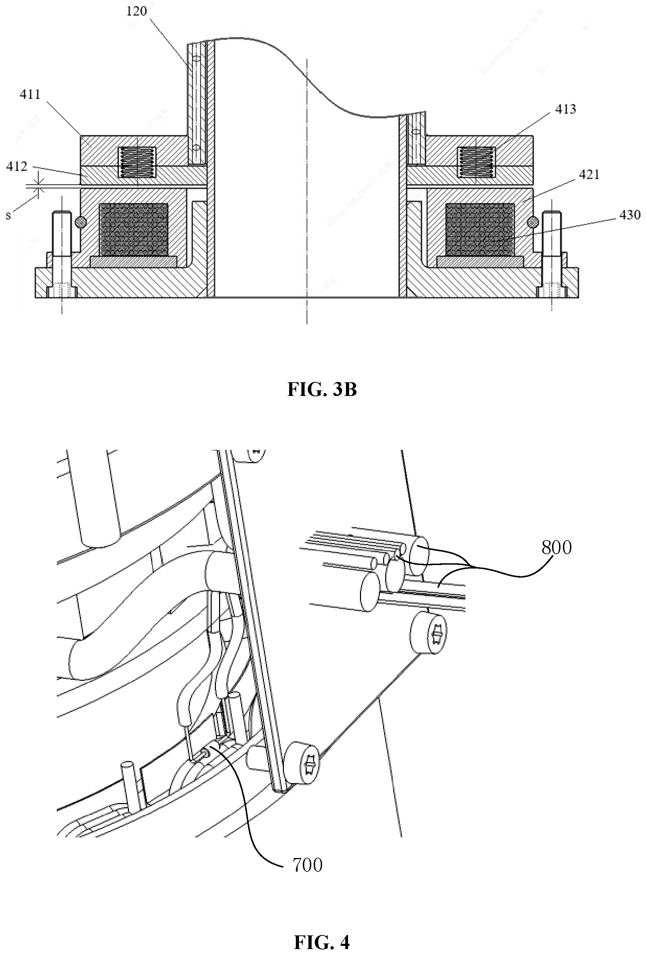

In this embodiment, as shown in FIG. 3B, the brake assembly 400 may be a permanent magnet brake, the first magnetic member 410 is a rotor assembly of the brake, and the second magnetic member 420 is a stator assembly of the brake. The rotor assembly includes a fixing plate 411, a first permanent magnet 412, and a reset member 413. The fixing plate 411 is fixedly connected to a second driving member 120. The first permanent magnet 412 is movably connected to the fixing plate 411 through a plurality of guide posts, and a surface of the first permanent magnet 412 facing the stator assembly is coated with a friction coating, so that the first permanent magnet 412 may serve as the first friction plate at the same time. The reset member 413 is a coil spring. In other embodiments, the reset member may be a leaf spring, which is not limited in the present disclosure. The stator assembly includes a second permanent magnet 421 and a coil 430. A surface of the second permanent magnet 421 facing the rotor assembly is coated with a friction coating, so that the second permanent magnet 421 may serve as the second friction plate at the same time.

Specifically, when the coil 430 is powered on, a magnetic force is generated, which overcomes the magnetic force between the first permanent magnet 412 and the second permanent magnet 421 and pushes the rotor assembly upward, resulting in a gap s between the rotor assembly and the stator assembly, and the coil spring is deformed to realize unlocking, allowing the second driving member 120 to rotate to drive the transmission assembly 300 to move in the first direction under an interaction of electromagnetic forces. When the coil 430 is powered off, only the attractive magnetic force between the first permanent magnet 412 and the second permanent magnet 421 exists, and the coil spring returns, to eliminate the gap s, and realize the contact, pre-loading, and locking of the first friction plate and the second friction plate, thereby preventing the second driving member 120 from rotating. The brake assembly 400 in this embodiment may lock a height position of the transmission assembly 300 in real time.

It should be noted that the second permanent magnet 421 may also be replaced by a non-magnetic housing, and in this case, after the coil 430 is powered off, the gap s between the rotor assembly and the stator assembly is eliminated only by return of the coil spring.

In some embodiments, the first direction includes a vertical direction, and the brake assembly 400 is located below the driving assembly 100 and the transmission assembly 300 in the vertical direction, thereby ensuring that the vehicle height does not drop due to gravity.

In some embodiments, the driving assembly 100 includes a first driving member 110 and a second driving member 120, and the second driving member 120 is located in the first driving member 110. In response to the first driving member 110 being powered on, a magnetic field generated by the first driving member 110 drives the second driving member 120 to rotate around a central axis of the second driving member 120. The first driving member 110 and the second driving member 120 are annular in shape, the transmission assembly 300 is located in the second driving member 120, the transmission assembly 300 is connected to the second driving member 120, and the transmission assembly 300 is configured to convert a rotational motion of the second driving member 120 into a linear motion in the first direction. In this embodiment, the driving assembly 100 includes a motor, the first driving member 110 is a stator, and the second driving member 120 is a rotor. The driving assembly 100 in this embodiment may further include a winding 130, and the winding 130, after being powered on, generates a rotating magnetic field to drive the rotor to rotate. Further, the above motor may include a ring motor, and the motor may be a DC brushless motor with an operating voltage of 48 V.

In some embodiments, the transmission assembly 300 includes a first transmission member 320, a second transmission member 330, and a third transmission member 340. The first transmission member 320 is connected to the second driving member 120, and the second driving member 120 is configured to drive the first transmission member 320 to rotate. The second transmission member 330 is located in the first transmission member 320, and the second transmission member 330 is in a hollow cylindrical shape in the first direction to define the accommodating cavity 310. The first transmission member 320 is provided with an internal thread, and the second transmission member 330 is provided with an external thread corresponding to the internal thread of the first transmission member 320. There are a plurality of third transmission members 340, and the plurality of third transmission members 340 are engaged with the first transmission member 320 and the second transmission member 330, so that a rotational motion of the first transmission member 320 is converted into a linear motion of the second transmission member 330 along the first direction. In this embodiment, the transmission assembly 300 may include a planetary roller screw mechanism, the first transmission member 320 includes a screw nut, the second transmission member 330 includes a screw, and the third transmission member 340 includes a roller.

Specifically, the rotor in the motor may cooperate with the roller screw, the motor generates a torque, and when the rotor performs a rotational motion, the screw nut is driven to perform a rotational motion. Since a raceway is included in an inner surface of the screw nut, a surface of the roller, and an area in which the screw cooperates with the roller, when the screw nut rotates under the drive of the rotor, the roller rotates in reverse, and indirectly makes the screw perform an axial linear motion. When the screw performs the axial linear motion through the rotational motion of the motor rotor, the torque generated by the motor will be transmitted to the screw through the rotational motion. At this time, a linear torque generated by the screw pushes and compresses the elastic member 200 to perform an axial linear motion in the first direction. The ride comfort is optimized by changing the height of the vehicle body through stiffness of the elastic member 200.

In the related art, the vehicle is lifted through transmission and cooperation between the screw and the nut. The lifting apparatus 10 according to the embodiments of the present disclosure utilizes the planetary roller screw pair for torque amplification and vehicle lifting, which has a high transmission ratio and a strong lifting force.

The lifting apparatus 10 according to the embodiments of the present disclosure is safe and reliable in hardware, and can accommodate usage environments of the vehicle under various operating conditions.

In some embodiments, the lifting apparatus10 further includes a limiting assembly, the limiting assembly includes a first bearing 921 and a second bearing 922, the first bearing 921 and the second bearing 922 are both connected to the first transmission member 320, and the first bearing 921 and the second bearing 922 are spaced apart from each other along the first direction. The first bearing 921 and the second bearing 922 may include ball bearings, which can bear radial and axial forces and limit the position of the driving assembly 100.

In some embodiments, the lifting apparatus 10 further includes a support member 500 configured to support the elastic member 200, the support member 500 is connected to the transmission assembly 300, and the support member 500 is farther away from the brake assembly 400 than the transmission assembly 300. The support member 500 can be driven by the transmission assembly 300 to move along the first direction, to drive the elastic member 200 to move along the first direction. Further, the support member 500 may include a buffer portion 510, which is disposed at a portion where the elastic member 200 abuts against the support member 500, and may protect the support member 500 and the elastic member 200 and prolong service life of the support member 500 and the elastic member 200. The buffer portion 510 may be made of an elastic material, such as a rubber material.

In some embodiments, the lifting apparatus 10 further includes an outer housing 910, the outer housing 910 defines a housing cavity, and the driving assembly 100, the transmission assembly 300, and the brake assembly 400 are located in the housing cavity. The outer housing 910 includes a first wall and a second wall opposite to each other in the first direction, the outer housing 910 is provided with an opening portion penetrating through the first wall and the second wall, and the opening portion is configured to receive the vibration damping apparatus 20. The lifting apparatus 10 may further include a support plate 950 and an end cover 960. As shown in FIG. 3A, the support plate 950 may be connected to the support member 500 by using a bolt, and the end cover 960 may be connected to the outer housing 910 by using a bolt, to achieve good sealing and waterproofing performance.

In the lifting apparatus 10 according to the embodiments of the present disclosure, oil injection lubrication may be applied between various moving components, such as the transmission assembly 300 and the driving assembly 100, which may increase a service life of the lifting apparatus 10 and reduce noise generated by the lifting apparatus 10 during operation to a certain extent.

On the basis of the above embodiments, the lifting apparatus 10 may further include an oil seal 930. The oil seal 930 is a sealing apparatus for preventing leakage of lubricant. As shown in FIG. 3A, in this embodiment, the oil seal 930 is located between the outer housing 910 and the vibration damping apparatus 20, and is disposed around the outer cylinder of the vibration damping apparatus 20 to prevent the leakage of the lubricant from a gap between the vibration damping apparatus 20 and the outer housing 910. The oil seal 930 can effectively prevent leakage of lubricating oil or grease, and block external pollutants from entering an interior of the lifting apparatus 10, ensuring a normal operation of the lifting apparatus 10. Optionally, the oil seal 930 may be composed of a metal shell, a spring, and a rubber sealing ring. The sealing ring is used to apply pressure to the vibration damping apparatus 20 and tightly fit against it to form an effective sealing protective layer. The lifting apparatus 10 according to the embodiments of the present disclosure has good sealing performance, with a waterproof rating reaching IP68 or higher.

In some embodiments, the lifting apparatus 10 may further include a sliding sleeve 940. The sliding sleeve 940 is a mechanical part for reducing friction and wear. As shown in FIG. 3A, in this embodiment, the sliding sleeve 940 is located between the outer housing 910 and the vibration damping apparatus 20, and is disposed around the outer cylinder of the vibration damping apparatus 20, which plays a role of supporting, guiding, and protecting, and may provide a limiting effect for the screw, reduce friction and wear between components, prolong the service life of the lifting apparatus 10, and ensure the normal operation of the lifting apparatus 10. Optionally, the sliding sleeve 940 may be made of a metal material, such as copper, aluminum, or steel.

In some embodiments, the lifting apparatus 10 further includes an encoder 600 disposed at the transmission assembly 300, and the encoder 600 is configured to monitor states of the driving assembly 100 and the transmission assembly 300. The encoder 600 may include a circuit board and a magnetic ring, and may record a rotation direction and revolutions of the rotor in the driving assembly 100 and an operating travel position of the screw in the transmission assembly 300 in real time, to provide feasibility for implementing function control logic. The encoder 600 may be integrated inside the lifting apparatus 10 to achieve high integration of the lifting apparatus 10.

FIG. 4 is a schematic partial enlarged view of the lifting apparatus 10 shown in FIG. 2. In some embodiments, the lifting apparatus 10 further includes a temperature sensor 700, configured to monitor temperatures of the driving assembly 100 and the transmission assembly 300. The temperature sensor 700 may be integrated inside the lifting apparatus 10, which may facilitate real-time monitoring of an operating state of the driving assembly 100 (e.g., motor), and is safe and reliable. In summary, the lifting apparatus 10 according to the embodiments of the present disclosure has a high integration, and is flexible and convenient to arrange.

As shown in FIG. 4, the lifting apparatus 10 according to the embodiments of the present disclosure may further include a wiring harness 800, through which a power source may be provided for various components, and the lifting apparatus 10 may be communicatively connected with an external controller to realize information interaction for convenient control.

The lifting apparatus 10 according to the embodiments of the present disclosure mainly functions to lift the vehicle, improve a ground clearance of the vehicle, and increase an approach angle, a departure angle, and a ramp break-over angle of the vehicle, so that the vehicle can easily traverse obstacles or steep slopes that are difficult to traverse in a normal vehicle attitude, thereby increasing use scenarios of the vehicle. In addition, the lifting apparatus 10 belongs to a fully active intelligent suspension, and is a key component in an advanced magic carpet suspension. The lifting apparatus 10 according to the embodiments of the present disclosure is convenient to adjust, has a fast lifting speed and a high efficiency, has a continuously adjustable lifting height, and has a faster adjustment speed, a wider adjustment travel, and a higher reliability compared with a general air spring, so that the vehicle can easily handle severe operating conditions such as rocky terrain, shell craters, and ramp jump under deep off-road operating conditions. The lifting apparatus 10 according to the embodiments of the present disclosure may dynamically control four wheels of the vehicle, respectively, which greatly improves comfort of the vehicle, and can also greatly improve a pitch angle of the vehicle under conditions such as emergency braking and rapid acceleration of the vehicle, and a roll angle of the vehicle during emergency cornering, thereby improving handling stability of the vehicle and bringing better driving and riding experience to users.

The lifting apparatus 10 according to the embodiments of the present disclosure may perform information interaction with other sensors of the vehicle, realize real-time dynamic control of each wheel by the controller, have a high response frequency, can quickly and conveniently lift the vehicle, greatly improve the handling, comfort, and safety of the vehicle, and can provide the users with driving experience as smooth as on a flat ground even under severe operating conditions.

The lifting apparatus 10 in any one of the above embodiments of the present disclosure may be applied to various function scenarios of the vehicle, and the vehicle may include various operating modes corresponding to various function scenarios. The lifting apparatus 10 according to the embodiments of the present disclosure may be applied in the following multiple operating modes.

Specifically, an operating mode of the vehicle may include a roll control mode of the vehicle. In the roll control mode of the vehicle, the lifting apparatus 10 may functionally replace the traditional front and rear passive and active stabilizer bars. Sensors on the vehicle may monitor a roll state of the vehicle in real time, providing lateral force support for the vehicle. For example, when the vehicle is entering a corner, the lifting apparatuses on two inner wheels actively contract, causing the support member 500 to lower by a travel H1 within a specified time t1, and the lifting apparatuses on two outer wheels can actively extend, causing the support member 500 to rise by a travel H2 within a specified time t2, so as to improve a roll angle of the vehicle. After the wheels exit the corner, the inner and outer lifting apparatuses may be quickly restored to a balanced state. The roll state of the vehicle may also be identified by a vehicle speed signal and a steering wheel angle sensor signal, or be monitored by a roll sensor of the vehicle. The above sensors may be arranged as close as possible to a center of mass of the vehicle, and may also cooperate with a vision sensor, which has a corner preview function, and the lifting apparatus may be maintained in the lifting state for a long time.

The operating mode of the vehicle may include a pitch control mode of the vehicle. In the pitch control mode of the vehicle, when the vehicle is accelerating rapidly, according to an acceleration value of the vehicle, the lifting apparatuses on both sides of a front suspension may actively contract instantaneously within a specified time, causing the support member 500 to lower and reduce the height of the front fender flare. At the same time, the lifting apparatuses on both sides of a rear suspension actively extend instantaneously within a specified time, to provide a support force at the rear of the vehicle and reduce a tendency for the vehicle to pitch up. When the acceleration value reaches 0m/s² or approaches 0m/s², the front and rear lifting apparatuses will be restored to a design state. When the vehicle is braking or decelerating urgently, according to a deceleration value of the vehicle, the lifting apparatuses on both sides of the front suspension actively extend instantaneously within a specified time, causing the support member 500 to rise and increase the height of the front fender flare. At the same time, the lifting apparatuses on both sides of the rear suspension actively contract instantaneously within a specified time, to provide a support force at the front of the vehicle and reduce a tendency for the vehicle to pitch down. When the deceleration value reaches 0m/s² or approaches 0m/s², the front and rear lifting apparatuses will be restored to the design state. It should be noted that whether the pitch of the vehicle needs to be controlled by both front and rear axle motors or be controlled by a single axle motor needs to be ultimately determined according to software calibration results, which is not limited in the present disclosure.

The operating mode of the vehicle may include a vehicle escape lifting mode. In the vehicle escape lifting mode, the vehicle encounters severe operating conditions such as muddy roads, sandy roads, snow-covered roads, or steep slopes at this time, and the vehicle may realize automatic lifting of a chassis by controlling the lifting apparatus 10, so as to increase the ground clearance, the approach angle, the departure angle, and the ramp break-over angle of the vehicle, thereby improving the off-road capability of the vehicle. After the vehicle is connected with environmental sensors, e.g., a camera-based road data acquisition system, via a network, road conditions may be identified in advance. When the vehicle is travelling on a potholed road surface, the lifting apparatus 10 according to the embodiments of the present disclosure can always keep any bouncing wheel in contact with the ground, and provide a driving force.

The operating mode of the vehicle may include an entertainment mode. In the entertainment mode, when the vehicle is stationary or travelling at low speeds, the four wheels of the vehicle may rise and fall independently and rhythmically by controlling the lifting apparatus 10 according to a preset entertainment mode, such as a light music entertainment mode and a rock-and-roll entertainment mode. Rhythmic bouncing of the vehicle may provide a pleasant feeling to a driver or a passenger. However, in this mode, the vehicle may also rise and fall according to a music rhythm. It should be noted that, to ensure safety, the entertainment mode may be enabled only when there is a driver or a passenger in the vehicle.

The operating mode of the vehicle may include a welcome mode. In the welcome mode of the vehicle, the vehicle may automatically enable the welcome mode, or the user may manually enable the welcome mode. Specifically, in the welcome mode enabled automatically, when a driver-side door is opened, that is, the driver moves from outside to inside the vehicle, the vehicle may be quickly lifted as a whole by controlling the lifting apparatus 10, which is convenient for the driver to get on the vehicle. When the driver-side door is closed, the vehicle may be quickly lowered as a whole to be restored to the design state. When the driver-side door is opened, that is, the driver moves from inside to outside the vehicle, the vehicle may be quickly lowered as a whole, which is convenient for the driver to get off the vehicle, and the vehicle attitude is restored to the design state after the driver-side door is closed. In the welcome mode enabled manually, manual adjustment may be performed according to actual vehicle requirements. The manual adjustment may be performed by using a physical switch in the vehicle on the driver side, a key, or a soft switch on an infotainment screen, to facilitate rear passengers with limited mobility such as elderly persons, pregnant women, or children to get on and off the vehicle. If the driver is not inside the vehicle, the welcome function of the vehicle may also be manually enabled, to facilitate passengers to get on and off.

The operating mode of the vehicle may include a safe driving mode. In the safe driving mode of the vehicle, the pitch angle of the vehicle is suppressed, an axle load transfer is reduced, and a braking distance is shortened. When the vehicle sensor detects that there is a risk of a side collision, the lifting apparatus on the collision side will quickly lift to an upper limit, and raise the height of the vehicle body on the collision side, so that a lower floor of the vehicle can receive external impacts as much as possible, reducing the severity of the collision, and protecting the driver and passengers. When the risk of the side collision disappears, the lifting apparatus may be quickly restored to the design state. When the vehicle sensor detects that there is a risk of a frontal collision, the front end of the vehicle will be quickly raised, to reduce the severity caused by the potential frontal collision, and the vehicle attitude is restored to the design state after the risk is eliminated.

The operating mode of the vehicle may include a smooth driving mode of the vehicle. In the smooth driving mode of the vehicle, a correlation between left and right wheels may be decoupled to improve driving comfort of the vehicle. When the vehicle is traversing a road surface such as a bump or a speed hump, a wheel on an impacted side will contract instantaneously by controlling the lifting apparatus 10, to alleviate an impact from the road surface, thereby reducing an impact strength on the vehicle by the road surface. When the vehicle is traversing a potholed road surface, affected wheels are lifted instantaneously by controlling the lifting apparatus 10, and the tires are in contact with the potholed road surface instantaneously to provide sufficient support for the vehicle.

The operating mode of the vehicle may include a loading and unloading mode of the vehicle. In the loading and unloading mode of the vehicle, after a trunk of the vehicle is opened, the vehicle as a whole will be quickly lowered by controlling the lifting apparatus 10, thereby improving convenience of loading and unloading goods from the vehicle. When the trunk of the vehicle is closed, the vehicle attitude is restored to the design state, which is convenient for driving the vehicle.

The operating mode of the vehicle may include a camping mode of the vehicle. In the camping mode of the vehicle, the heights of four wheels of the vehicle may be independently controlled and adjusted. When the vehicle is parking on rough road surfaces during camping or exploration, the driver may activate a one-touch camping leveling switch. The vehicle attitude control module may enable the vehicle to keep level on varying rough road surfaces by controlling the lifting apparatus 10, thereby meeting extreme off-road requirements of the user and enabling the user to lie flat. When the user finishes the camping, an intelligent suspension system (including the lifting apparatus 10) automatically exits the camping leveling function at the moment the vehicle is started.

The operating mode of the vehicle may include a vehicle protection mode. In the vehicle protection mode, when a certain lifting apparatus of the vehicle experiences a stall or fails to operate due to other faults, the remaining lifting apparatuses will automatically extend or contract to a height position matched with the certain lifting apparatus, and four lifting apparatuses will then be locked at the same time and cease receiving any external commends, so as to ensure that the vehicle may be driven normally to an after-sales maintenance point.

When the vehicle is overloaded and a load on one or more lifting apparatuses exceeds the lifting force, the intelligent suspension system automatically enters a self-protection mode, and the screw of the lifting apparatus is actively adjusted to its lowest position to perform overload protection on the screw. In this case, the load is transmitted through the elastic member, the support member, the end cover of the motor, the outer housing of the motor, and the welding bracket on the outer cylinder of the vibration damping apparatus, and the load on the screw is released by means of mechanical limit.

In this vehicle protection mode, braking reliability protection may also be provided. Specifically, each lifting apparatus is provided with a separate brake unit, which is automatically locked in a case of power-off and is automatically unlocked in a case of power-on. In order to ensure reliability of the brake, the brake can only be locked when the rotor is stationary or rotates at a low speed, which is realized by the vehicle controller.

In this vehicle protection mode, protection against ramp jump may also be provided. Specifically, when a wheel height sensor or another sensor detects that a wheel is airborne, and a lifting travel of the lifting apparatus corresponding to the airborne wheel exceeds two-thirds of a block length of a jounce bumper, the lifting apparatus will automatically contract to a corresponding spring seat height below the block length, which, on the one hand, may prevent the coil spring from being over-compressed and affecting its service life, and on the other hand, may alleviate an impact load on the lifting apparatus. The jounce bumper is an elastic component inside the vibration damping apparatus and plays a limiting role during the compression stroke.

The operating mode of the vehicle may include a high-temperature protection mode. In the high-temperature protection mode of the vehicle, when an operating temperature of the lifting apparatus is below 150°C, power may be enabled at 100%. When the operating temperature is in a range of 150°C to 160°C, the power limitation needs to be actively performed, and the power is linearly reduced to 0KW. It may be understood that the high-temperature protection mode may be implemented by using the controller and the temperature sensor 700 in the above embodiments.

The operating mode of the vehicle may include a vehicle warning mode. In the vehicle warning mode, the vehicle equipped with the intelligent suspension system may transmit dangerous road condition information acquired in a current environment to the cloud, which may realize safety warning, prompts for speed reduction, or emergency avoidance for the following vehicles.

The lifting apparatus 10 according to the embodiments of the present disclosure belongs to a fully active intelligent suspension of the vehicle, and has a fast response speed, which may improve the driving experience of users.

The foregoing are merely some embodiments of the present disclosure, and are not intended to limit the present disclosure. Any modification, equivalent substitution, or improvement made without departing from the spirit and principle of the present disclosure shall fall within the scope of protection of the present disclosure.

## Claims

1. A lifting apparatus (10), comprising:
a driving assembly (100);
an elastic member (200);
a transmission assembly (300), connected to the driving assembly (100), and connected to the elastic member (200), the driving assembly (100) being configured to drive the transmission assembly (300) to move along a first direction, so that the transmission assembly (300) drives the elastic member (200) to move along the first direction, wherein the transmission assembly (300) comprises an accommodating cavity (310) extending along the first direction and configured to accommodate a vibration damping apparatus (20); and
a brake assembly (400), comprising a first magnetic member (410) and a second magnetic member (420), the first magnetic member (410) being connected to the driving assembly (100),
wherein the brake assembly (400) is configurable in a power-on state and a power-off state, wherein in the power-on state, there is a gap between the first magnetic member (410) and the second magnetic member (420) to allow the driving assembly (100) to drive the transmission assembly (300) to move; and in the power-off state, the first magnetic member (410) is attracted to the second magnetic member (420) to prevent the driving assembly (100) from driving the transmission assembly (300) to move.

2. The lifting apparatus (10) according to claim 1, wherein the first magnetic member (410) comprises a first permanent magnet (412), a reset member (413), and a first friction plate, the second magnetic member (420) comprises a second permanent magnet (421), a coil (430), and a second friction plate, there is an attractive magnetic force between the first permanent magnet (412) and the second permanent magnet (421), and the reset member (413) is configured to provide the first permanent magnet (412) with an elastic force, so as to move the first permanent magnet close to the second permanent magnet (421);
in response to the brake assembly (400) being in the power-on state, the coil (430) is powered on to overcome the attractive magnetic force between the first permanent magnet (412) and the second permanent magnet (421), to cause the first magnetic member (410) to move away from the second magnetic member (420), so that there is the gap between the first magnetic member (410) and the second magnetic member (420), and the reset member (413) is deformed; and
in response to the brake assembly (400) being in the power-off state, the coil (430) is powered off, the reset member (413) returns, and the attractive magnetic force between the first permanent magnet (412) and the second permanent magnet (421) causes the first magnetic member (410) to move towards the second magnetic member (420), so that the first friction plate and the second friction plate are preloaded.

3. The lifting apparatus (10) according to claim 1, wherein the first direction comprises a vertical direction, and the brake assembly (400) is located below the driving assembly (100) and the transmission assembly (300) in the vertical direction.

4. The lifting apparatus (10) according to claim 1, wherein the driving assembly (100) comprises a first driving member (110) and a second driving member (120), the second driving member (120) is located in the first driving member (110), and in response to the first driving member (110) being powered on, a magnetic field generated by the first driving member (110) drives the second driving member (120) to rotate around a central axis of the second driving member (120); and
the first driving member (110) and the second driving member (120) are annular in shape, the transmission assembly (300) is located in the second driving member (120), the transmission assembly (300) is connected to the second driving member (120), and the transmission assembly (300) is configured to convert a rotational motion of the second driving member (120) into a linear motion along the first direction.

5. The lifting apparatus (10) according to claim 4, wherein the transmission assembly (300) comprises a first transmission member (320), a second transmission member (330), and a third transmission member (340), the first transmission member (320) is connected to the second driving member (120), and the second driving member (120) is configured to drive the first transmission member (320) to rotate;
the second transmission member (330) is located in the first transmission member (320), and the second transmission member (330) is in a hollow cylindrical shape in the first direction to define the accommodating cavity (310); and
the first transmission member (320) comprises an internal thread, the second transmission member (330) comprises an external thread corresponding to the internal thread of the first transmission member (320), there are a plurality of third transmission members (340), and the plurality of third transmission members (340) are engaged with the first transmission member (320) and the second transmission member (330), so that a rotational motion of the first transmission member (320) is converted into a linear motion of the second transmission member (330) along the first direction.

6. The lifting apparatus (10) according to claim 1, further comprising:
a support member (500) configured to support the elastic member (200), the support member (500) being connected to the transmission assembly (300), and the support member (500) being farther away from the brake assembly (400) than the transmission assembly (300);
wherein the support member (500) is configured to be driven by the transmission assembly (300) to move along the first direction, so as to drive the elastic member (200) to move along the first direction.

7. The lifting apparatus (10) according to claim 1, further comprising:
an encoder (600), disposed at the transmission assembly (300), and configured to monitor states of the driving assembly (100) and the transmission assembly (300); and/or
a temperature sensor (700), configured to monitor temperatures of the driving assembly (100) and the transmission assembly (300).

8. The lifting apparatus (10) according to claim 1, further comprising:
an outer housing (910), defining a housing cavity, the driving assembly (100), the transmission assembly (300), and the brake assembly (400) being located in the housing cavity;
wherein the outer housing (910) comprises a first wall and a second wall opposite to each other in the first direction, the outer housing (910) comprises an opening portion penetrating through the first wall and the second wall, and the opening portion is configured to receive the vibration damping apparatus (20).

9. The lifting apparatus (10) according to claim 5, further comprising:
a limiting assembly, comprising a first bearing (921) and a second bearing (922), the first bearing (921) and the second bearing (922) being both connected to the first transmission member (320), and the first bearing (921) and the second bearing (922) being spaced apart from each other along the first direction.

10. The lifting apparatus (10) according to claim 5, wherein the transmission assembly (300) comprises a planetary roller screw mechanism, the first transmission member (320) comprises a screw nut, the second transmission member (330) comprises a screw, and the third transmission member (340) comprises a roller.

11. The lifting apparatus (10) according to claim 6, wherein the support member (500) comprises a buffer portion (510), the buffer portion (510) is disposed at a portion where the elastic member (200) abuts against the support member (500), and is configured to protect the support member (500) and the elastic member (200).

12. The lifting apparatus (10) according to claim 8, further comprising:
an oil seal (930), located between the outer housing (910) and the vibration damping apparatus (20), and disposed around the vibration damping apparatus (20).

13. The lifting apparatus (10) according to claim 8, further comprising:
a sliding sleeve (940), located between the outer housing (910) and the vibration damping apparatus (20), and disposed around the vibration damping apparatus (20).

14. A vehicle, comprising:
a vibration damping apparatus (20); and
the lifting apparatus (10) according to any one of claims 1 to 13, the vibration damping apparatus (20) being assembled in the accommodating cavity (310).

15. The vehicle according to claim 14, wherein the vibration damping apparatus (20), the driving assembly (100), the transmission assembly (300), and the brake assembly (400) are coaxially assembled.
